# EUROPEAN PATENT APPLICATION

(11) **EP 1 162 557 A1**
(43) Date of publication of application: **12.12.2001**
(21) Application number: 00304858.4
(22) Date of filing: 08.06.2000
(51) Int. Cl.: G06F 17/60

(54) **A method of aircraft maintenance**

(71) Applicant: BAE SYSTEMS plc, Farnborough, Hampshire GU14 6YU (GB)
(72) Inventor: The designation of the inventor has not yet been filed
(74) Representative: Edis, Ronald Malcolm

(57) **Abstract**

A method of aircraft maintenance including the steps of analysing predicted and empirical reliability data for an aircraft and components under consideration and analysing usage data of the aircraft and combining the said analysed data with analysed data from other aircraft in the fleet in order to predict the stock levels of the components to be held.

## Description

The invention relates to an aircraft maintenance system dealing with maintenance management across the fleet. The first unit of the package to be developed has been for material management that is replaceable items/spares. It is intended to use the method of the invention to bid for maintenance type contracts from different airlines. The package allows them to put together bids for different airline fleets for different part numbers of spares, approximately 1000 per contract and then present a price to a potential customer. They can then come up with a new price if any of the variables change e.g. different spares and number of aircraft, length of contract within 15 minutes. The old method of doing this using manual calculations would take approximately 8 days to come up with a new figure and would not be based on an entirely new calculation but would be edited from the original quote because of the time constraint and that would not be as accurate. The new computerised method allows them to start from scratch again and still come up with the quote within 15 minutes or thereabouts. The new system also looks at each aircraft in the fleet individually and thus comes back with a more accurate quote i.e. it looks at the number of each part number fitted to a fleet, the age of each aircraft so when the part is likely to need replacing. It doesn't consider a standard fleet and all aircraft the same as the old system did. It also considers the true age of components in the individual aircraft rather than an arbitrary figure as the old system did to the whole fleet.

On arriving at this quote the package looks at all streams of reliability data for the parts in question, be this from their airline itself or manufacturer etc. Stores of individual parts to be held are then calculated and the system can differentiate between high risk items such as items that cause AOG situations, items that are peculiar to type and thus hard to get hold of and other items that can come from a central pool. All sources of potential items are also considered, including from a central pool, loan from another airline or from the manufacturer. The frequency and year of purchase of each individual item is also considered over the life of a contract. This will take into account such things as hard lives, shelf lives etc as well as the likelihood of failure in any given year. Other units of the method of the invention package which have been considered for development at a later stage include heavy maintenance and engine maintenance, (here the main variable will be log cards instead of component part numbers); aircraft line maintenance and training etc.

All variables are inputted from screen such as the aircraft number, age of aircraft, number of flying hours expected to fly in any one given year etc. Although at present the method of the invention is envisaged as a bid tool it could be used by any individual engineering/airline company to streamline their aircraft maintenance operations.

The invention is a system, exemplified in a computer model, originally developed in Microsoft Excel, which is used to calculate the cost of providing rotable material for operators of aircraft. The model is used as a tool to instantly provide a proposal to the customer based on the specific parameters selected. The model is driven by data readily available from the aircraft operators, suppliers and the OEMs, but which has never been incorporated in one model. The outputs from the model include recommended stock purchasing levels and dates, a full and detailed financial analysis including cash flow and profit and loss and a quote including details of part numbers covered. The method of the invention also identifies potential targets for strategic alliances and evaluates the contribution that these alliances would make to the appeal of a bid proposal.

Specifically, The method of the invention is a cost modelling tool that determines, from component level, the expected cost of providing a material support service to an airline operator. Potential customers provide a list of components to be included in the contract, which is cross-referenced with a database and subsequently provides the model with all the relevant information regarding those components

Predicted and empirical reliability data is utilised along with information provided by the operator to determine the number of times each component is expected to need repairing. The total cost of these repairs is then determined from repair cost estimates and the probability of occurrence for each type of repair.

The cost of providing an advance exchange spare parts service, from a central, shared, pool, during the repair periods is also calculated from statistical evaluation of the stock levels required to support the contract. The level of spares stock provisioning is determined from an analysis of reliability data to ascertain which parts are expected to fail during the contract and the confidence with which demand for spares will be met for any given stock level. The stock-purchasing schedule is then determined from consideration of component ages and expected failure dates.

The model also allows for a level of consignment stock holding which is dedicated to the customer and held by them at their central hub.

The costs of setting up the infrastructure to support the contract along with the logistics costs (of storage and transportation), the cost of administering, managing and financing the contract are also accounted for by the model.

The cost of providing the material support service is then determined from analysis of the cost breakdown described above before a quote is supplied to the customer. This quote can be made on either a fixed price per occurrence basis, for repair and overhaul, or as a cost per flying hour.

### Summary of the key features and unique attributes of the model:

- The expected cost that will be incurred is calculated, for every component, as a function of all major contract variables. This feature gives the model unparalleled flexibility along with the ability to rapidly and accurately evaluate a greater number of scenarios and contractual permutations than was previously possible.
- The model reduces uncertainty in the cost effectiveness and competitiveness of a bid by explicit calculation of all expected costs at a component level. Continuous improvement in the data quality is achieved through regularly updating the information utilised by the model to incorporate feedback during the contract and the latest available cost and reliability data. This facility allows the model to make increasingly accurate bids as the data iterates towards its true value.
- All costs and revenues calculated within the model are fully integrated with the model's financial analysis and output sections. This feature allows the immediate assessment of the attractiveness of any bid proposition and identifies areas of concern such as periods of restrictive cash flow. The financial section of the model includes tools for; comparing leasing to purchasing of stock, investigating the effects of changing mark-ups on costs, fluctuations in economic variables such as exchange rates and interest rates etc.
- Leaner and smarter stock provisioning is made possible by identifying which components are expected to fail and calculating the mean level of spares demand for each component. Statistical modelling techniques are then employed to recommend stock levels for each component such that demand for spares is met to a specified level of confidence.
- The model also identifies, e.g. by share of component value, OEM organisations that should be considered for strategic alliances in producing a competitive bid for the contract. The model incorporates the ability to immediately assess the full implications of any proposed strategic alliance on the competitiveness of the bid and the financial performance of the contract

The current version of the method of the invention is seen as one module of a total support bid-modelling tool capable of producing a quote, tailored to specific customer requirements, in a variety of formats, based on a complete bottom up analysis of costs.

Full utilisation of web technology to rapidly transfer data between the customer, the method of the invention and its management team is a development of this concept, which is currently being worked on.

## Claims

1. A method of aircraft maintenance including the steps of analysing predicted and empirical reliability data for a particular aircraft and components under consideration and analysing usage data of the aircraft and combining the said analysed data with analysed data from other aircraft in the fleet in order to predict stock levels of components to be held.
